# EUROPEAN PATENT APPLICATION

(11) **EP 0 623 767 A1**
(43) Date of publication of application: **09.11.1994**
(21) Application number: 94107144.1
(22) Date of filing: 06.05.1994
(51) Int. Cl.: F16H 57/04, F16N 39/02, F28F 1/42

(54) **Device for cooling the gear system of a crane**

(30) Priority: 07.05.1993 FI 932094
(71) Applicant: KCI Konecranes International Corporation, FIN-05830 Hyvinge (FI)
(72) Inventor: Jussila, Olavi, SF-05830 Hyvinkää (FI)
(74) Representative: Zipse + Habersack

(57) **Abstract**

The invention relates to a device for cooling a gear system. The gear system comprises a box (1) and transmission gears (11,12) fitted inside it. The box (1) of the gear system is at least partially filled with a fluid (15). According to the invention, the gearbox (1) is provided with a heat transfer tube (16) going through the box (1) in its fluid-filled portion. To remove heat from the gear system, air is blown through the tube (16) by means of an air impeller (17). The exterior and interior surfaces of the tube (16) are provided with fins for more efficient heat transfer.

## Description

The present invention relates to a device for cooling the gear system of a crane according to the preamble of claim 1.

In the intermediate gears transmitting the torque in gear systems, part of the power to be transmitted is converted into heat in the gears, friction surfaces and bearings. For example, in the gear system of a 100-kW crane, the propor-tion of this power consumption is of the order of about 5%. At least part of the power converted into heat must be dis-sipated so as to prevent the operating temperature of the gear system from rising too much, which would cause a de-terioration of the lubricating power and reduce the service life of the gear system. In certain crane applications, the gear system is also used as a brake, which means that a large proportion of the braking power is converted into heat in the gear system. In such applications, the amount of heat to be dissipated is still larger.

In earlier technology, the heat developed in gear systems has been dissipated via natural conduction of heat from the gear box into the ambient air. For more efficient cooling, the outside surface of the gear box has been provided with cooling fins increasing the external area of the box, thereby enhancing the conduction of heat. In cooling systems engineering, solutions are known where an operating machine or a separate mechanism is used to create a flow of cooling air along the box walls. E.g. in the gear system of a crane, which is operated intermittently, it is not possible to use a fan mounted on the shaft of the gear system to produce a sufficient ventilation. On the other hand, installing an extra fan on the outside to create an air flow along the box walls is out of the question because of the costs and the extra space required for the fan. In applications where the braking power is converted into heat in the gear system, the volume of the gear box has also been increased, allowing a larger amount of thermal power to be stored and increasing the box surface area conducting heat.

The object of the present invention is to achieve a cooling system for a gear system which is simple and cheap to manufacture and produces a sufficient cooling power in all situations. To accomplish this, the invention is characterized by the features specified in the characterization part of claim 1. Other embodiments of the invention are character-ized by the features presented in the subclaims.

The solution of the invention provides a high cooling capacity. It is easy to fit in gear systems in production and requires no special equipment or additional operations. Using a thermostat, the cooling power and temperature of the gear system can be adjusted optimally. Therefore, the cooling system operates as long as there is a need for cool-ing, even during standstill of the gear system. The cooling system can also be kept active continuously without signifi-cantly increasing the power consumption of the apparatus as a whole. The gear system can be flexibly designed consider-ing space and aesthetic requirements because the solution of the invention uses a small apparatus placed largely inside a gear box. The components of the apparatus are economic in comparison with the advantages achieved and previous constructions. A cooling tube as provided by the invention can be produced economically e.g. by extruding sections which are then cut into pieces of suitable length. A large cooling area and a high cooling capacity can be achieved by means of external cooling fins provided with serrations.

In the following, the invention is described in detail by the aid of one of its embodiments by referring to the attached drawings, in which
- Fig. 1 presents a gear system in lateral view,
- Fig. 2 presents section A-A of Fig. 1, taken along a plane intersecting the cooling apparatus, and
- Fig. 3 presents a magnified detail of section B-B in Fig. 2.

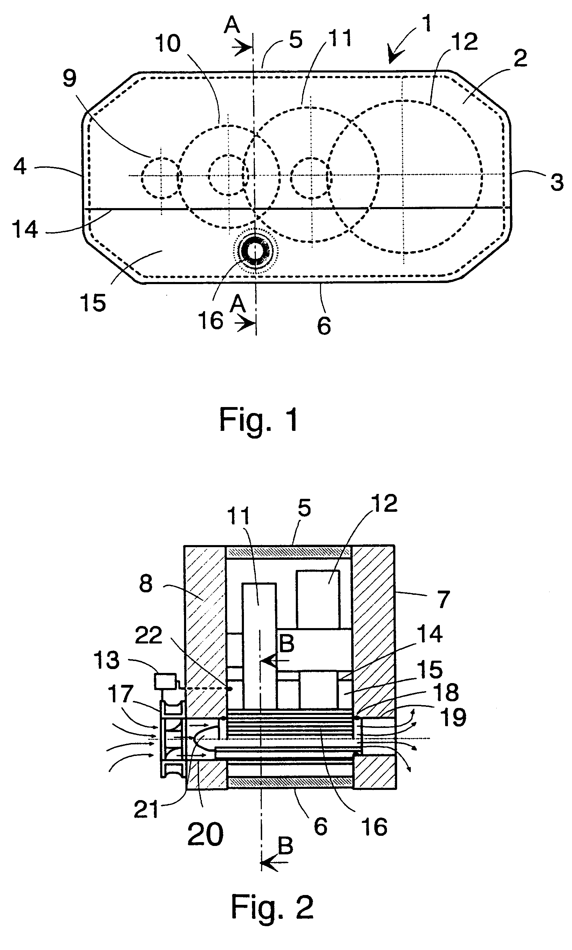

Fig. 1 shows a gear system 1 in diagrammatic form in side view, i.e. as seen from the direction of the shaft of the gear system. The frame of the gear system 1 consists of a box 2 having end walls 3 and 4, a top side 5, a bottom side 6 and side walls 7 and 8 (Fig. 2). The gear system consists of gears 9, 10, 11 and 12 which transmit the torque of a drive motor connected to the shaft of gear 9 to a gearing unit connected to the shaft of gear 12, the smaller gears in gear wheels 9, 10 and 11 engaging the corresponding larger gears of gear wheels 10, 11 and 12. The method of connecting the drive motor and gearing unit to the gear system is irrelevant to the present invention and are not shown in the drawings. The shafts of the gear wheels 9 - 12 are rotatably mounted with bearings placed in journal boxes in the side walls 7 and 8 of the gear box.

The box 2 of the gear system is partially filled with oil so that the oil surface 14 lies somewhat below the shafts of the gear wheels 9 - 12 when the gear system is inactive. The fluid space 15 of the apparatus is the space delimited by the oil surface 14, the bottom side 6, side walls 7 and 8 and end walls 3 ja 4. The volume of the fluid 15 varies during operation as the oil undergoes thermal expansion. The fluid spreads to all parts of the box due to the flow gener-ated by the gear wheels. However, in all situations during operation, the lower part of the box, i.e. space 15, always remains filled with fluid. Fitted in this lower part is a cooling tube 16 acting as a heat transfer tube through which air is blown by means of an air impeller 17 (Fig. 2).

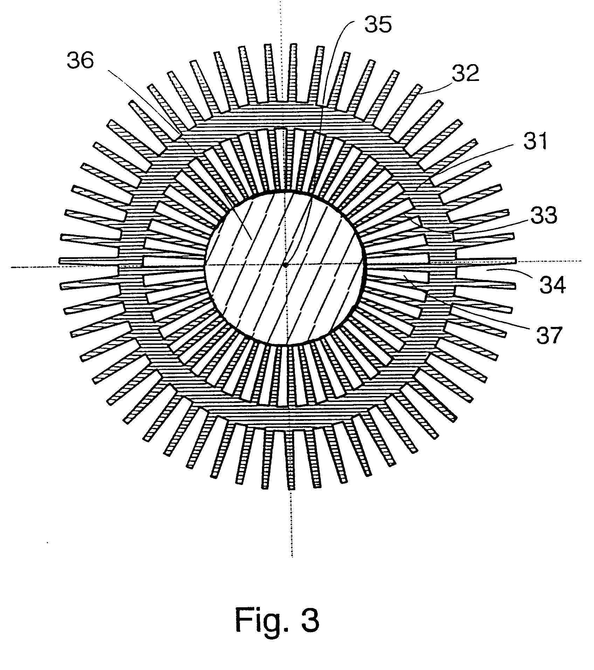

Fig. 2 presents a section A - A of a gear system as pre-sented in Fig. 1. The same reference numbers are used in Fig. 2 to refer to corresponding parts mentioned in Fig. 1. The division plane of the gear box is preferably a vertical plane, e.g. one of the side walls 7 or 8. The box may be composed of two halves of substantially equal size, in which case the division plane is the vertical plane at the junc-ture of the two halves. The cooling tube 16 is mounted be-tween the side walls 7 and 8 of the gear box 2, in holes 19 and 20 provided in the side walls. The ends of the tube 16 are sealed with O ring seals 18 which are fitted in grooves made for them and pressed against the edges of the holes 19 and 20. Mounted on side wall 8 against the cooling tube 16 is an impeller 17 which blows a cooling agent, in this case air, through the tube as indicated by the arrows in Fig. 2. Fitted at the tube end next to the impeller 17 is an air guide 21 which guides the air flow to the inside edges of the cooling tube and to the fins provided in it as described in connection with Fig. 3. Mounted in the fluid space 15 of the gear box is the temperature sensor 22 of a thermostat. On the basis of the measurement result given by the sensor, a controller 13 controls the impeller in a manner known in itself. The impeller may also be operated continuously or for a predetermined length of time after the gear system has been stopped.

Fig. 3 is a section of the cooling tube 16, taken along line B - B in Fig. 2. The tube consists of a body 31 and external cooling fins 32 extending outwards from the body 31 and internal cooling fins 33 extending inwards from the body 31. The external 32 and internal 33 cooling fins extend from the body 31 substantially in the direction of the radius of the cross-section of the tube. The spaces 34 between the exter-nal fins 32 are filled with transmission oil, which is agi-tated by the rotation of the gear wheels and is in contact with the cooling tube over its whole external surface, per-mitting heat transmission between the tube and the oil. The internal fins 33 extend to the same distance from the axis 35 of the tube. The central portion 36 of the tube is filled with solid material. The impeller 17 blows air into the slots 37 between the tube body 31 and the central portion 36. The body 31 of the cooling tube is substantially straight and connected by its ends to the side walls of the gear box as illustrated by Fig. 2. The design of the cooling tube 16 may vary considerably as regards the shape of the cross-section and the internal and external surfaces. The external fins may lie parallel to the axis of the tube as in Fig. 3, in which case the tube has a uniform cross-section over its whole length. The external fins may also wind around the tube or be oriented in a direction perpendicular to the axis 35, or the finning may be non-continuous with suitable spaces between finned portions.

Similarly, the external fins can be provided with various serrations to increase the area of the outer surface. In this way, the oil contact area and oil flow on the tube surfaces can be increased. The heat transfer tube 16 in Fig. 3 consists of a single body with internal and external fins, but it could just as well be composed of a separate body and separate internal and external fins.

In the above, the invention has been described in reference to one of its embodiments. However, the presentation is not to be regarded as limiting the sphere of patent protection, but the embodiments of the invention may vary within the limits defined by the following claims.

## Claims

1. Apparatus for cooling the gear system of a crane by means of air, said gear system comprising at least a box (1) having a first and a second wall and transmission gears (9,10,11,12) mounted by their shafts in the walls, said box (1) being at least partially filled with a fluid (15), **characterized** in that the apparatus is provided with at least one heat transfer tube (16) going through the box (1) substantially within the fluid-filled portion (15), and with a device (17) mounted on the tube (16) for blowing air through it.

2. Apparatus according to claim 1, **characterized** in that the exterior (32) and interior (33) surfaces of the heat trans-fer tube (16), respectively, are so designed that the heat transfer tube (16) has a large surface area in contact with the fluid (15) and the cooling medium, respectively.

3. Apparatus according to claim 1 or 2, **characterized** in that the heat transfer tube (16) is tightly joined with the walls (7,8) of the box (1).

4. Apparatus according to any one of claims 1 - 3, **characterized** in that the heat transfer tube (16) is provided with internal cooling fins (33) extending towards the axis (35) of the tube and that the central cavity (36) formed between the internal fins (33) is filled with a medium.

5. Apparatus according to any one of claims 1 - 4, **characterized** in that the heat transfer tube (16) has external fins (32) extending outwards and laid at least partially in the radial direction.

6. Apparatus according to claim 5, **characterized** in that the external fins are laid in the direction of the axis (35) of the heat transfer tube (16).

7. Apparatus according to claim 5, **characterized** in that the external fins are laid in a direction parallel to a sec-tional plane transverse to the axis (35) of the heat trans-fer tube (16).

8. Apparatus according to any one of claims 1 - 7, **characterized** in that it is provided with a temperature sensor (22) placed in contact with the transmission fluid (15) and that the apparatus comprises a controller (13) which, on the basis of the measurement by the temperature sensor (22), controls the device (13) for passing a cooling medium through the tube (16).

9. Apparatus according to any of claims 1 to 8, **characterized** by a substantially straight heat transfer tube (16) going through the box (1) from the first wall (7) to the second wall (8) of the box (1).
